**Europäisches Patentamt**

**European Patent Office**

**Office européen des brevets**

(19)

(11) Veröffentlichungsnummer: **0 228 482**
**B1**

(12) **EUROPÄISCHE PATENTSCHRIFT**

(45) Veröffentlichungstag der Patentschrift:
**24.05.89**

(51) Int. Cl.⁴: **H01M 6/38**

(21) Anmeldenummer: **85202051.0**

(22) Anmeldetag: **11.12.85**

(54) Batterie mit mechanisch aktivierbaren galvanischen Zellen.

(43) Veröffentlichungstag der Anmeldung:
**15.07.87 Patentblatt 87/29**

(45) Bekanntmachung des Hinweises auf die Patenterteilung:
**24.05.89 Patentblatt 89/21**

(84) Benannte Vertragsstaaten:
**BE CH DE FR GB IT LI NL**

(56) Entgegenhaltungen:
**EP-A- 0 026 606**
**EP-A- 0 115 099**
**DE-A- 2 638 645**
**GB-A- 1 149 556**
**US-A- 3 754 996**

(73) Patentinhaber: **Silberkraft Leichtakkumulatoren GmbH,
Meidericher Strasse 6-8, D-4100 Duisburg 1(DE)**

(72) Erfinder: **Jacobi, Wilfried, Dr. Dipl.-Chem.,
Unterlehberg 12 B, D-4300 Essen 18(DE)**

(74) Vertreter: **Ackmann, Günther, Dr.-Ing.,
Claubergstrasse 24 Postfach 10 09 22,
D-4100 Duisburg 1(DE)**

ACTORUM AG

## Beschreibung

Die Erfindung betrifft eine Batterie mit mechanisch aktivierbaren galvanischen Zellen, welche aus einem axial innerhalb eines Stapels ringförmig ausgebildeter Zellen angeordneten und mit wenigstens einer Sollbruchstelle versehenen zylinderförmigen Elektrolytbehälter besteht, der bei einer starken Beschleunigung der Batterie an seiner Sollbruchstelle zerstört wird.

Für Projektile finden in bekannter Weise mechanisch aktivierbare glavanische Zellen zur Stromversorgung eingebauter elektronischer Bauteile Verwendung. Die galvanischen Zellen werden mit Hilfe mechanischer Bauteile erst während der Beschleunigung des Projektils durch Zuführen eines Elektrolyts aktiviert, um einerseits eine vorherige Entladung der galvanischen Zellen zu verhindern und weil anderseits eine Stromversorgung erst während der Beschleunigung stattfinden soll. Zur Aktivierung der galvanischen Zellen ist beispielsweise aus der DE-OS 26 38 645 eine bei der Beschleunigung des Projektils wirksam werdende Aktivierungseinrichtung bekannt, bei der im Elektrolytbehälter auf dessen Boden ein Trägheitskörper befestigt und die Behälterwand mit einer ringförmig umlaufenden, als Sollbruchlinie bestimmten Einschnürung mit verminderter Wanddicke versehen ist.

Um bei Projektilen mit einer Abschußbeschleunigung einerseits eine Aktivierung zu erzielen, anderseits aber bei rauher Behandlung des Projektils durch Fallenlassen, Stoßeinwirkung o. dgl. eine unerwünschte Aktivierung zu verhindern, ist zwischen dem gleitbar im Batteriegehäuse gelagerten Elektrolytbehälter und dem Boden des Batteriergehäuses ein elastischer Körper angeordnet; erst wenn dessen Federkraft überwunden ist und ein Flansch des Elektrolytbehälters gegen einen Anschlag stößt, soll der mit dem Trägheitskörper ausgestattete Behälterteil von dem festgehaltenen Behälterteil an der Sollbruchlinie abgerissen werden, so daß der Elektrolyt in die galvanischen Zellen fließt und diese für ihre stromliefernde Funktion aktiviert. Diese Ausführung hat den Nachteil, daß einerseits besondere Schutzvorrichtungen gegen beim Transport des Projektils auftretende Stöße o. dgl. benötigt werden und anderseits die Restwandstärke neben der Sollbrucheinschnürung eine sehr hohe Präzision verlangt, die bei einer einfachen zylindrischen Behälterform nur durch einen gesonderten Fertigungsschritt erreichbar ist. Wird das vorgeschriebene Maß der in der Einschnürungszone belassenen Wandstärke nicht genau eingehalten, ist weder definierbar, bei welcher Trägheitskraft der Elektrolytbehälter aufgerissen wird, noch sind reproduzierbare Verhältnisse zu schaffen.

Demgegenüber liegt der Erfindung die Aufgabe zugrunde, eine Batterie der gattungsgemäßen Art derart auszubilden, daß der Elektrolytbehälter bei einer vorgegebenen Trägheitskraft zuverlässig geöffnet wird und die Aktivierungsvorrichtung von besonders einfachem Aufbau ist.

Diese Aufgabe wird bei einer auf Stauchung beanspruchten Ausführung entsprechend dem Oberbegriff des Anspruchs 1 dadurch gelöst, daß der Trägheitskörper unter dem Behälterboden angeordnet und an dem von der Behälterwand und einem trichterförmigen Bodenteil gebildeten Außenrand wenigstens eine im Querschnitt V-förmige Kerbe vorgesehen ist, deren Grundlinie die Außenfläche der Behälterwand und die Außenfläche des trichterförmigen Bodenteils schneidet und etwa rechtwinklig zum gegenüberliegenden mit einer Rille versehenen Innenrand verläuft.

Bei der dem Anspruch 1 entsprechenden Ausführung wird der Elektrolytbehälter gegen den Trägheitskörper gedrückt und dabei gleichsam gestaucht. In Verbindung mit diesem Stauchvorgang reißt der Elektrolytbehälter exakt an der Stelle auf, wo die Grundlinie der V-förmigen Kerbe den Innenrand zwischen Behälterwand und trichterförmigem Bodenteil kreuzt. An dieser Kreuzungsstelle befindet sich eine punktförmige Schwachstelle, an der das Aufreißen ansetzt, das sich entlang der Grundlinie der Kerbe fortsetzt und auf diese Weise einen Öffnungsschlitz freigibt, durch den der Elektrolyt ausfließen kann. Die am Außenrand des Elektrolytbehälters vorgesehene Kerbe läßt sich in ihrer Lage, ihren Abmessungen und ihrer Tiefe sehr genau und auf eine Art und Weise gestalten, daß damit auch die zwischen der Grundlinie der Kerbe und dem Innenrand verbleibende, für das Einleiten des Sollbruches maßgebende Wanddicke äußerst exakt ausbildar ist. Für das Pressen bzw. Spritzgießen eines aus Kunststoff gefertigten Elektrolytbehälters liegt damit ein einfach beherrschbarer Aufbau vor.

Für eine schnelle Aktivierung sind vorzugsweise am Außenrand mehrere, auf dem Umfang verteilte Kerben angeordnet. Zur Fixierung des Trägheitskörpers ist zweckmäßig unter dem Behälterboden des Elektrolytbehälters ein Kragen angebracht, vorzugsweise ange formt, in dem der Trägheitskörper angeordnet ist.

Liegt hingegen eine auf Zug beanspruchte Ausführung entsprechend dem Oberbegriff des Anspruchs 2 vor, so besteht die Lösung der Aufgabe darin, daß die Behälterwand des Elektrolytbehälters eine sanduhrförmige Einschnürung mit einer verringerten Wanddicke hat und an dem Innenrand der Einschnürung wenigstens eine im Querschnitt V-förmige Kerbe vorgesehen ist, deren Grundlinie die Innenfläche der beiden sanduhrförmigen Teile der Behälterwand schneidet und etwa rechtwinklig zum gegenüberliegenden Außenrand verläuft.

Bei der dem Anspruch 2 entsprechenden Ausführung wird der Elektrolytbehälter, wie an sich aus der DE-OS 26 38 645 bekannt, auf Zug beansprucht, wobei jedoch die Einschnürung nach außen gezogen wird und an den von den Kerben gebildeten punktförmigen Schwachstellen aufreißt. Auch bei dieser Ausführung läßt sich die für das Einleiten des Sollbruchs maßgebende Anordnung und Ausbildung der Kerben und der Einschnürung vorhandenen Verringerung der Wandstärke exakt ausführen. Zweckmäßig ist der von der Einschnürung gebildete Außenrand mit einer unlaufenden Rille versehen. Die Kerben sind vorzugsweise auf dem Umfang des Elektrolytbehälters verteilt. Um möglichst große Austrittsöffnungen zu bilden, kann die Grundlinie der V-förmigen Kerben bis etwa in den Bereich des Behälterbodens und Behälterdeckels geführt sein.

Der Gegenstand der Erfindung ist in der Zeichnung anhand mehrerer Ausführungsbeispiele dargestellt; es zeigt:

Fig. 1 einen mittleren Längsschnitt durch eine Batterie mit einem zentrisch angeordneten Elektrolytbehälter in einem stark vergrößerten Maßstab,

Fig. 2 den Randbereich des in Fig. 1 gezeigten Elektrolytbehälters stark vergrößert,

Fig. 3 einen Elektrolytbehälter in einer anderen Ausführung,

Fig. 4 den Randbereich einer weiteren Ausführungsform des Elektrolytbehälters in einem Längsschnitt und stark vergrößert.

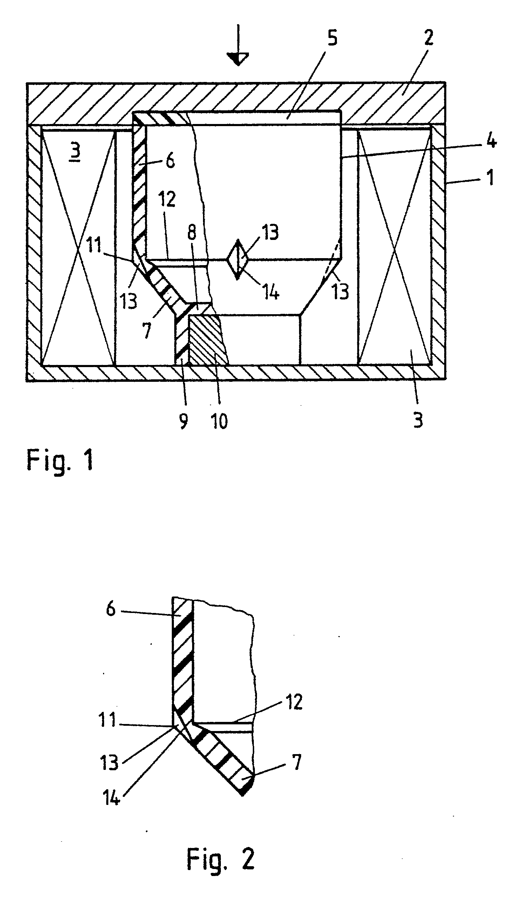

Die in Fig. 1 in stark vergrößertem Maßstab dargestellte Batterie hat je nach den geforderten Batterieeigenschaften einen Durchmesser von etwa 1 bis 2 cm. Das Batteriegehäuse 1, der Batteriedeckel 2 sowie der Elketrolytbehälter 4 und dessen Behälterdeckel 5 bestehen aus einem gegenüber der Elektrolytflüssigkeit inerten Kunststoff, z. B. Polypropylen. In der zylinderförmigen Batterie 1 ist ein Stapel 3 ringförmig ausgebildeter galvanischer Zellen (Primärelemente) angeordnet, in deren zentrischem Schacht der zylinderförmige Elektrolytbehälter 4 angeordnet ist. Der Elektrolytbehälter 4 besteht aus der zylinderförmigen Behälterwand 6 mit einem trichterförmigen Bodenteil 7, einem Behälterboden 8, ist mit einer von der Zellentype abhängigen Elektrolytflüssigkeit gefüllt und ist durch den z. B. angeschweißten Behälterdeckel 5 verschlossen. Unter dem Behälterboden ist ein ringförmiger Kragen 9 angeformt, in dem ein Trägheitskörper 10 von hoher Dichte, z. B. aus Blei o. dgl. eingelagert ist.

Zur Bildung von Sollbruchstellen ist der Elektrolytbehälter 4 an dem von der Behälterwand 6 und dem trichterförmigen Bodenteil 7 gebildeten Innenrand mit einer umlaufenden Rille 12 versehen, welche die Wanddicke mindert. Zusätzlich ist der Elektrolytbehälter 4 an dem der Rille 12 gegenüberliegenden Außenrand 11 mit vier gleichmäßig auf dem Umfang verteilten Kerben 13 versehen. Diese Kerben 13 haben einen im wesentlichen V-förmigen Querschnitt, und ihre Grundlinie 14 schneidet sowohl die Außenfläche der Behälterwand 6 wie auch die Außenfläche des trichterförmigen Bodenteils 7 (vgl. Fig. 2). Außerdem verläuft die Grundlinie 14 jeder Kerbe 13 etwa rechtwinklig zu der im Inneren umlaufenden Rille 12, so daß jeweils zwischen der sich kreuzenden Kerbe 13 und umlaufenden Rille 12 eine punktförmige Schwachstelle im Behälter gebildet ist, d. h. die Wandstärke am geringsten ist. Durch den schrägen Verlauf der Kerbe 13 nimmt die Wandstärke nach außen zu. Wird die Batterie mit dem Projektil durch Abschuß beschleunigt (in Fig. 1 von oben nach unten), so wird der Elektrolytbehälter 4 gegen den Trägheitskörper 10 gedrückt und dabei gestaucht, so daß er an den Kerben 13 aufreißt. Das Aufreißen setzt an den punktförmigen Schwachstellen an und setzt sich entlang der Grundlinien nach oben und unten fort, wobei Öffnungsschlitze entstehen, durch welche der Elektrolyt zur Aktivierung der umliegenden galvanischen Zellen ausströmt bzw. durch eine vom Projektil übertragene Drallbewegung radial nach außen geschleudert wird. Das trichterförmige Bodenteil 7 führt zu einer besonders günstigen Übertragung der Stauchkraft, so daß der entlang der Grundlinie 14 entstehende Schlitz seitlich aufgeweitet bzw. gespreizt wird. Das trichterförmige Bodenteil 7 wirkt hierbei wie ein Hebelarm, der die mit den Schwachstellen versehene Randzone radial nach außen drückt.

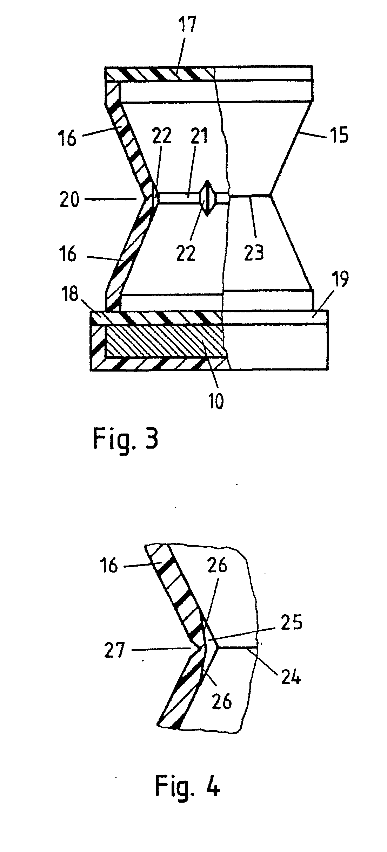

Die Fig. 3 zeigt einen Elektrolytbehälter 15, der infolge einer Zugbeanspruchung geöffnet wird. Hierfür hat die Behälterwand 16 eine sanduhrartige Form und ist mit einem am Batteriegehäuse angeschweißten Behälterdeckel 17 und einem angeformten Behälterboden 18 versehen. An den Behälterboden 18 ist noch ein mit einem Trägheitskörper 10 versehener Flansch 19 angeformt, so daß bei Einwirkung von axialen Beschleunigungskräften (in der Zeichnung von unten nach oben) die Behälterwand auf Zug beansprucht und radial nach außen gezogen wird. Die Sollbruchstellen befinden sich an der Einschnürung 20 der Behälterwand 16. Zur Minderung der Wanddicke ist der von der Innenfläche gebildete, an sich im Querschnitt stumpfwinklige Innenrand 21 abgeflacht. Im Querschnitt V-förmige Kerben 22 sind am Innenrand (21) angebracht, wobei deren Grundlinie die Innenfläche der beiden sanduhrförmigen Teile der Behälterwand 16 schneidet und etwa rechtwinklig zum gegenüberliegenden Außenrand der Einschnürung 20 verläuft. Bei dieser Ausführung sind die beiden die Sollbruchstellen bestimmenden Gestaltungselemente, nämlich der abgeflachte, die Wanddicke mindernde Innenrand (21) und die etwa senkrecht hierzu verlaufenden, im Querschnitt U-förmigen Kerben 22 auf der Innenfläche der Behälterwand 16 angebracht. Es besteht aber auch die Möglichkeit, eine die Wanddicke mindernde Rille (27) außen an der Einschnürung 20 vorzusehen, während der Innenrand 24 stumpfwinklig ausgebildet ist, wie Fig. 4 zeigt. In Fig. 4 ist weiterhin gezeigt, daß die Grundlinie 26 der V-förmigen Kerben 25 unter Bildung eines stumpfen Winkels oder bogenförmig verlängert ausgeführt sein kann, bedarfsweise sogar bis knapp zum Behälterboden 18 bzw. -deckel 17, so daß beim Aufreißen entsprechend lange Schlitze entstehen. In entsprechender Weise ist auch die Grundlinie 14 der Kerben 13 der Ausführung nach den Fig. 1 und 2 auf der Außenfläche der Behälterwand 6 und des trichterförmigen Bodenteils 7 nach oben bzw. nach unten verlängerbar.

**Patentansprüche**

1. Batterie mit mechanisch aktivierbaren galvanischen Zellen, bestehend aus einem axial innerhalb eines Stapels (3) ringförmig ausgebildeter Zellen angeordneten und mit wenigstens einer Sollbruchstelle versehenen zylinderförmigen Elektrolytbehälter (4) sowie einem Trägheitskörper (10), der bei einer starken Beschleunigung der Batterie auf den Elektrolytbehälter (4) einwirkt und diesen an seiner Sollbruchstelle zerstört, dadurch gekennzeichnet, daß der Trägheitskörper (10) unter dem Behälterboden (8) angeordnet und an dem von der Behälterwand (6) und einem trichterförmigen Bodenteil (7) gebildeten Außenrand (11) wenigstens eine im Querschnitt V-förmige Kerbe (13) vorgesehen ist, deren Grundlinie (14) die Außenfläche der Behälterwand (6) und die Außenfläche des trichterförmigen Bodenteils (7) schneidet und etwa rechtwinklig zum gegenüberliegenden, mit einer umlaufenden Rille (12) versehenen Innenrand verläuft.

2. Batterie mit mechanisch aktivierbaren galvanischen Zellen, bestehend aus einem axial innerhalb eines Stapels (3) ringförmig ausgebildeter Zellen angeordneten und mit wenigstens einer Sollbruchstelle versehenen Elektrolytbehälter (15), der bei einer starken Beschleunigung der Batterie an seiner Sollbruchstelle zerstört wird, sowie einem Trägheitskörper (10), dadurch gekennzeichnet, daß die Behälterwand (16) des Elektrolytbehälters (25) eine sanduhrförmige Einschnürung (20) mit einer verringerten Wanddicke hat und an dem Innenrand (21) der Einschnürung (20) wenigstens eine im Querschnitt V-förmige Kerbe (25) vorgesehen ist, deren Grundlinie die Innenfläche der beiden sanduhrförmigen Teile der Behälterwand (16) schneidet und etwa rechtwinklig zum gegenüberliegenden Außenrand verläuft.

3. Batterie nach Anspruch 1, dadurch gekennzeichnet, daß am Außenrand (11) mehrere, auf dem Umfang verteilte Kerben (13) angeordnet sind.

4. Batterie nach Anspruch 1 oder 2, dadurch gekennzeichnet, daß unter dem Behälterboden (8) ein Kragen (9) angebracht ist, in dem der Trägheitskörper (10) angeordnet ist.

5. Batterie nach Anspruch 2, dadurch gekennzeichnet, daß der von der Einschnürung (20) gebildete Außenrand mit einer umlaufenden Rille (27) versehen ist.

6. Batterie nach Anspruch 2 oder 5, dadurch gekennzeichnet, daß am Innenrand (21) mehrere, auf dem Umfang verteilte Kerben (22) angeordnet sind.

7. Batterie nach einem der Ansprüche 1 oder 2, dadurch gekennzeichnet, daß die Grundlinie (14 bzw. 26) der V-förmigen Kerben (13 bzw. 25) bis etwa in den Bereich des Behälterbodens (8 bzw. 18) und Behälterdeckels (5 bzw. 17) reicht.

## Claims

1. A battery containing mechanically activatable galvanic cells, consisting of a cylindrical electrolyte container (4) which is disposed axially inside a stack (3) of annular cells and which has at least one predetermined breaking point, and an inertia member (10) which, in the event of intensive acceleration of the battery, acts on the electrolyte container (4) and destroys the same at its predetermined breaking point, characterised in that the inertia member (10) is disposed beneath the base (8) of the container and at least one notch (13) of V-shaped cross-section is provided on the outer edge (11) formed by the container wall (6) and a funnel-shaped bottom part (7), the base line (14) of said notch intersecting the outer surface of the container wall (6) and the outer surface of the funnel-shaped base part (7) and extending substantially at right angles to the opposite inner edge, which is provided with a peripheral groove (12).

2. A battery having mechanically activatable galvanic cells, consisting of an electrolyte container (15) disposed axially inside a stack (3) of annular cells and provided with at least one predetermined breaking point, such container being destroyed at its predetermined breaking point in the event of intensive battery acceleration, and an inertia member (10), characterised in that the wall (16) of the electrolyte container (25) has an hourglass-shaped constriction (20) with a reduced wall thickness and at least one notch (25) of V-shaped cross-section is provided at the inner edge (21) of the constriction (20), the baseline of said notch intersecting the inner surface of the two hourglass parts of the container wall (16) and extending substantially at right angles to the opposite outer edge.

3. A battery according to claim 1, characterised in that a plurality of notches (13) distributed over the periphery are provided at the outer edge (11).

4. A battery according to claim 1 or 2, characterised in that a collar (9) is disposed beneath the container base (8), the inertia member (10) being disposed in said collar.

5. A battery according to claim 2, characterised in that the outer edge formed by the constriction has a peripheral groove (27).

6. A battery according to claim 2 or 5, characterised in that a plurality of notches (22) distributed over the periphery are disposed on the inner edge (21).

7. A battery according to claim 1 or 2, characterised in that the baseline (14 or 26) of the V-shaped notches (13 or 25) extends substantially to the area of the container base (8 or 18) and the container lid (5 or 17).

## Revendications

1. Batterie à cellules galvaniques activables par voie mécanique, constituée d'un godet à électrolyte (4) de forme cylindrique, disposé axialement à l'intérieur d'une pile de cellules annulaires et muni d'au moins un point de rupture, ainsi qu'un corps à inertie (10) qui agit, lorsque la batterie subit une forte accélération, sur le godet à électrolyte (4) et le détruit en son point destiné à la rupture, caractérisée en ce que le corps à inertie (10) est disposé sous le fond du godet (8) et, sur le bord extérieur (11) formé de la paroi du godet (6) et d'une partie de fond (7) en forme d'entonnoir, est prévue au moins une encoche (13) de section transversale en forme de V, dont la ligne de fond (14) coupe la surface extérieure de la paroi du godet (6) et la surface extérieure de la partie de fond (7) en forme d'entonnoir et s'étend à peu près à angle droit par rapport au bord intérieur opposé muni d'un sillon (12) périphérique.

2. Batterie à cellules galvaniques activables mécaniquement, constituée d'un godet à électrolyte (15) disposé axialement à l'intérieur d'une pile (3) de cellules annulaires et muni d'au moins un point de rupture, lequel godet est détruit en son point destiné à se rompre, lorsque la batterie est soumise à une forte accélération, ainsi qu'un corps à inertie (10), caractérisée en ce que la paroi (16) du godet à électrolyte (25) présente une partie rétrécie (20) en forme de sablier ayant une épaisseur de paroi plus petite et sur le bord intérieur (21) de la partie rétrécie (20) est prévue au moins une encoche (25) de section transversale en forme de V, dont la ligne de fond coupe la surface intérieure des deux parties en forme de sablier de la paroi du godet (16) et s'étend à peu près à angle droit par rapport au bord extérieur opposé.

3. Batterie suivant la revendication 1, caractérisée en ce que sur le bord extérieur (11) sont ménagées plusieurs encoches (13) réparties sur le pourtour.

4. Batterie suivant la revendication 1 ou 2, caractérisée en ce que en dessous de fond du godet (8) est prévu un collet (9) dans lequel est monté le corps à inertie (10).

5. Batterie suivant la revendication 2, caractérisée en ce que le bord extérieur formé par la partie rétrécie (20) est muni d'un sillon périphérique (27).

6. Batterie suivant la revendication 2 ou 5, caractérisée en ce que sur le bord intérieur (21) sont prévues plusieurs encoches (22) réparties sur le pourtour.

7. Batterie suivant l'une des revendications 1 ou 2, caractérisée en ce que la ligne de fond (14 ou 26) des encoches en forme de V (13 ou 25) s'étend à peu près jusqu'à la région du fond du godet (8 et 18) et du couvercle du godet (5 et 17).

Fig. 1

Fig. 2

Fig. 3

Fig. 4